Europäisches Patentamt

European Patent Office

Office européen des brevets

(19)

(11) **EP 1 108 737 A2**

(12) **EUROPEAN PATENT APPLICATION**

(43) Date of publication:
20.06.2001 Bulletin 2001/25

(51) Int Cl.7: **C08G 63/16**, C08G 63/78

(21) Application number: 00311146.5

(22) Date of filing: 13.12.2000

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.12.1999 KR 9958816**

(71) Applicant: **IRE Chemical Ltd**
**Gangnam-gu, Seoul 135-080 (KR)**

(72) Inventors:
• **Chung, Hyun Soo**
**Gangnam-gu, Seoul 135-240 (KR)**

• **Lee, Jae Wang**
**Dongjak-gu, Seoul 156-030 (KR)**
• **Kim, Dong Hoon**
**Seocho-gu, Seoul 137-063 (KR)**
• **Kim, Do Youn**
**Kwangjin-gu, Seoul 143-130 (KR)**
• **Lee, Suok Woo**
**Hoengseong-gun, Kangwon-do 225-870 (KR)**

(74) Representative: **Bannerman, David Gardner et al**
**Withers & Rogers,**
**Goldings House,**
**2 Hays Lane**
**London SE1 2HW (GB)**

(54) **Biodegradable copolyesters and their preparation**

(57)    An aromatic group-containing copolyester resin composition which has good biodegradability and physical properties is obtained by reacting (i) 0.1 wt% to 30wt% of an aliphatic prepolymer having a number-average molecular weight of from 300 to 30,000; (ii) one or more aromatic dicarboxylic acids or anhydrides thereof; (iii) one or more aliphatic or alicyclic dicarboxylic acids or anhydrides thereof; and (iv) one or more aliphatic or alicyclic glycols, wherein the copolyester resin has a number-average molecular weight of from 30,000 to 90,000, weight-average molecular weight of from 100,000 to 600,000, melting point of from 70°C to 150°C, and melt index of from 0.1 to 50 g/lOmin. (190°C, 2,160g). The product is a high molecular weight copolyester resin which has good biodegradability and displays the physical properties required for use in packaging films, rubbish bags and agricultural films.

EP 1 108 737 A2

**Description**

## FIELD OF THE INVENTION

The present invention relates to a copolyester resin composition which has good biodegradability and physical properties, and a process for preparing and/or producing the same. More particularly, the present invention has solved a problem of poor biodegradability of copolyester resins in which aromatic ingredients have been incorporated to improve the physical properties of the copolyester.

## DESCRIPTION OF THE RELATED ARTS

The present invention relates to a copolyester resin composition which has good biodegradability and physical properties and a process of preparation thereof. Conventional aliphatic polyesters biodegrade completely in the environment, but they have poor physical properties and inferior processability. To improve the physical properties and processability, an aromatic group may be incorporated into the aliphatic polyester, but the rate of biodegradation is greatly decreased because of the aromatic group.

The typical polyester resin used for various products including textures, fibers, moldings, formings, films, etc, is a high molecular weight aromatic polyester resin produced by the polycondensation of terephthalic acid with ethylene glycol, or terephthalic acid with 1,4-butanediol. The high molecular weight polyester resin is a polymer having a number average molecular weight of over 10,000. Such aromatic polyester resins are not degradable naturally so disposal is a serious problem of worldwide environmental concern.

Otherwise, the aliphatic polyester resins are known as being biodegradable (J. Macromol. Sci.-Chem., A23 (3), pp.393-409 (1986)). They have a variety of usage in the medical and agricultural fields, and other applications are being developed.

However, conventional aliphatic polyester resins have a low melting point and a high melt index, because of the structure of the main chain and the crystallinity thereof, and as they have low heat resistance and unsatisfactory mechanical properties, the use of these materials has been limited. In order to utilize an aliphatic polyester resin, it should have a number-average molecular weight of more than 30,000. However, it is difficult to manufacture aliphatic polyester resins having a number-average molecular weight of more than 15,000 using the conventional poly-condensation reaction system because further growth is overtaken by decomposition due to the poor heat stability of aliphatic polyesters.

In order to solve this problem, Korean Laid-Open Patent No. 95-758 discloses a process of preparing high molecular weight aliphatic polyester resins having a number average molecular weight of more than 30,000, by controlling the reaction temperature, the degree of vacuum and the amount of catalyst. However, these aliphatic polyester resins have poor processability because of low weight-average molecular weight and low heat stability.

In another method, Korean Laid-Open Patent No. 95-114171 discloses the process of preparing high molecular weight aliphatic polyester resins by introducing monomer containing poly(at least three)-functional groups, where the recommended functional groups are hydroxy (-OH) or carboxylic (-COOH). According to this process, by introducing such monomer, the reaction time can be reduced and the processability of the resin can be enhanced by broadening the molecular weight distribution. However, utilization of the polyester resin product is very difficult because physical properties such as a tensile strength are poor due to the increased amount of low molecular weight polymers. Furthermore, it is difficult to control the reaction for preparing the polyester resin, because the polyester resin easily forms a gel.

In yet another process for increasing the molecular weight of the aliphatic polyester resin, Korean Laid-Open Patent No. 95-25072 discloses high molecular weight aliphatic polyester resins produced by using isocyanate as a coupling agent reacting with an aliphatic polyester resin having a number-average molecular weight of from 15,000 to 20,000, which is produced by dehydration or deglycolation of (1) an aliphatic or alicyclic compound and (2) an aliphatic or alicyclic dicarboxylic acid (or anhydride), and a little of (3) a monomer of polyhydric alcohol or polyhydric carboxylic acid (or anhydride). According to the application, the aliphatic polyester resin has a number-average molecular weight of from 20,000 to 70,000. However, this process requires more time for the reaction which leads to poor production yield. And the isocyanate used as a coupling agent to increase the molecular weight is toxic so it needs to be handled carefully.

In yet another process, by incorporating an aromatic group into the aliphatic polyester, the physical properties have been greatly improved, but the rate of biodegradation is very slow.

## SUMMARY OF THE INVENTION

The present invention provides a copolyester resin composition which has good biodegradability and a process for preparing and/or producing the same. To improve the biodegradability and physical properties of the copolyester, the present invention employs a multi-stage reaction, and a copolyester resin having a number-average molecular weight of from 30,000 to 90,000, weight-average molecular weight of from 100,000 to 600,000, melting point of from 70°C to 150°C, and melt index of from 0.1 to 50 g/lOminute (190°C, 2,160g) can be obtained. The biodegradability and physical properties of the copolyester resin of the present invention have been greatly enhanced by incorporating (i) an "aliphatic prepolymer" having a number-average molecular weight of from 300 to 30,000, so that the aromatic components are distributed randomly with no more than 8 aromatic components in a row in the dicarboxylic acid positions of the copolyester chain. The product can be used in many practical applications including packaging films, rubbish bags and agricultural films.

To solve the above-mentioned problems, the present inventors have employed a multi-stage reaction. The copolyester resin composition according to the present invention will be described in detail hereinafter.

In the first reaction step, an oligomer-like substance (hereinafter referred to as "aliphatic prepolymer") having a number-average molecular weight of from 300 to 30,000 is obtained by one or more condensation, esterification and/or ester-exchange reactions between:

   (a) one or more aliphatic (or alicyclic) dicarboxylic acids (or anhydrides thereof), selected from succinic acid, glutaric acid, adipic acid, pimelic acid, suberic acid, azelaic acid, sebacic acid, 1,9-nonanedicarboxylic acid, 1,10-decanedicarboxylic acid; and
   (b) one or more aliphatic (or alicyclic) glycols, selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol.

Next, in the second reaction step, to from 0.1 wt% to 30 wt% of the (i) "aliphatic prepolymer" which was produced in the first reaction step, (ii) one or more aromatic dicarboxylic acids (or anhydrides thereof), selected from dimethyl terephthalate, terephthalic acid, phthalic acid, phthalic anhydride, isophthalic acid, 4-methylphthalic acid, 4-methylphthalic anhydride, dimethyl phthalate; and (iv) one or more aliphatic (or alicyclic) glycols selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol, are added, one or more esterification and/or ester-exchange reactions are performed, and the resulting water or methanol is extracted.

Then, in the third reaction step, (iii) one or more aliphatic (or alicyclic) dicarboxylic acids (or anhydrides thereof), selected from succinic acid, glutaric acid, adipic acid, pimelic acid, suberic acid, azelaic acid, sebacic acid, 1,9-nonanedicarboxylic acid, 1,10-decanedicarboxylic acid, are added, and one or more esterification and/or ester-exchange reactions are performed. After the resulting water or methanol has been extracted, polymeric resin is obtained.

Finally, in the fourth reaction step, by polycondensing the polymeric resin which was obtained in the third reaction step, a copolyester resin with number average molecular weight of from 30,000 to 90,000, weight average molecular weight of from 100,000 to 600,000, melting point of from 70°C to 150°C, and melt index of from 0.1 to 50 g/lOmin. (190°C, 2,160g) is obtained. This copolyester resin has good processability, physical properties and biodegradability.

As a result of this multi-stage reaction, the aromatic components became distributed randomly with not more than 8 contiguous aromatic components in the dicarboxylic acid positions of the copolyester chain.

To describe further the copolyester resin composition of this invention, in the first reaction step, (i) an "aliphatic prepolymer" having a number-average molecular weight of from 300 to 30,000 is produced by performing at least one condensation, esterification and/or ester-exchange reaction, with (a) one or more aliphatic or alicyclic dicarboxylic acids or anhydrides thereof including succinic acid; and (b) one or more aliphatic or alicyclic glycols selected from 1,4-butanediol and ethylene glycol, preferably (1) succinic acid alone; ethylene glycol alone or a mixture of ethylene glycol and other glycol (C3-C10 alkylene, C4-C10 cycloalkylene), (2) a succinic acid alone; 1,4-butanediol alone or a mixture of 1,4-butanediol and other glycol (C2-C3 and C5-C10 alkylene, C4-C10 cycloalkylene), (3) succinic acid alone or a mixture of succinic acid and other dicarboxylic acid (C3-C10 alkylene, C4-C10 cycloalkylene); ethylene glycol alone, (4) succinic acid alone or a mixture of succinic acid and other dicarboxylic acid (C3-C10 alkylene, C4-C10 cycloalkylene); 1,4-butanediol alone, (5) succinic acid alone or a mixture of succinic acid and other dicarboxylic acid (C3-C10 alkylene, C4-C10 cycloalkylene); ethylene glycol alone or a mixture of ethylene glycol and other glycol (C3-C10 alkylene, C4-C10 cycloalkylene), (6) succinic acid alone or a mixture of succinic acid and other dicarboxylic acid (C3-C10 alkylene, C4-C10 cycloalkylene); 1,4-butanediol alone or a mixture of 1,4-butanediol and other glycol (C2-C3 and C5-C10 alkylene, C4-C10 cycloalkylene)

In the second reaction step, from 0.1wt% to 30wt% of (i) an "aliphatic prepolymer" produced in the first reaction step, is reacted with (ii) one or more aromatic dicarboxylic acids or anhydrides thereof, including dimethyl terephthalate and terephthalic acid; and (iv) one or a plurality of aliphatic (including cyclic type) glycol selected from at least one of 1,4-butanediol and ethylene glycol, preferably (1) dimethyl terephthalate (including terephthalic acid) alone; ethylene glycol alone or mixture of ethylene glycol and other glycol (C3-C10 alkylene, C4-C10 cycloalkylene), (2) dimethyl terephthalate (including terephthalic acid) alone; 1,4-butanediol alone or mixture of 1,4-butanediol and other glycol (C2-C3 and C5-C10 alkylene, C4-C10 cycloalkylene), (3) dimethyl terephthalate (including terephthalic acid) alone or a mixture of dimethyl terephthalate (including terephthalic acid) and another aromatic dicarboxylic acid (or anhydride thereof); ethylene glycol alone, (4) dimethyl terephthalate (including terephthalic acid) alone or a mixture of dimethyl terephthalate (including terephthalic acid) and another aromatic dicarboxylic acid (or anhydride thereof); 1,4-butanediol alone, (4) dimethyl terephthalate (including terephthalic acid) alone or a mixture of dimethyl terephthalate (including terephthalic acid) and another aromatic dicarboxylic acid (or anhydride thereof); 1,4-butanediol alone, (5) dimethyl terephthalate (including terephthalic acid) alone or a mixture dimethyl terephthalate (including terephthalic acid) and another aromatic dicarboxylic acid (or anhydride thereof); ethylene glycol alone or a mixture of ethylene glycol and another glycol (C3-C10 alkylene, C4-C10 cycloalklene), (6) dimethyl terephalate (including terephthalic acid) alone or a mixture of dimethyl terephthalate (including terephalic acid) and another aromatic dicarboxylic acid (or anhydride thereof); 1,4-butanediol alone or a mixture of 1,4-butanediol and another glycol (C2-C3 and C5-C10 alkylene, C4-C10 cycloalkylene), in one or more esterification and/or ester-exchange reactions and the resulting water or methanol is extracted.

The present invention provides a process for preparing and/or producing the above mentioned copolyester resin comprising four reaction steps which are described below in detail.

In the first reaction step, (i) the "aliphatic prepolymer" defined above is obtained by one or more condensation, esterification and/or ester-exchange reactions, at the temperature of from 160°C to 240°C, with; (a) one or more aliphatic (or alicyclic) dicarboxylic acids (or anhydrides) including succinic acid; and (b) one or more aliphatic (or alicyclic) glycols selected from at least one of 1,4-butanediol and ethylene glycol, and the resulting water or methanol is extracted. If the reaction temperature is lower than 160°C, the water or methanol cannot be extracted. If the reaction temperature is higher than 240°C, the reactants may become degraded. The chemical reaction is represented by the following equation (I), wherein succinic acid is employed as the (a) aliphatic dicarboxylic acid, and 1,4-butanediol is employed as the (b) aliphatic glycol.

$$HOOC\text{-}(CH_2)_2\text{-}COOH + HO\text{-}(CH_2)_4\text{-}OH \; ' \; HO\text{-}[OC\text{-}(CH_2)_2\text{-}COO\text{-}(CH_2)_4\text{-}O]_n\text{-}H \qquad (I)$$

n is an integer such that the number-average molecular weight of the (i) "aliphatic prepolymers" is in the range of from 300 to 30,000.

To produce (i) the "aliphatic prepolymer" the mole ratio of (a) aliphatic or alicyclic dicarboxylic acid anhydride to (b) aliphatic or alicyclic type glycol is in the range of from 1.0:1.15 to 1.0:2.0, and preferably in the range of from 1.0:1.3 to 1.0:1.4. If the mole ratio is less than 1.0:1.15, the reactivity decreases and the resin becomes yellow or brown in color. If the mole ratio exceeds 1.0:2.0, the production cost becomes very high.

Next, in the second reaction step, from 0.1wt% to 30wt% of (i) the "aliphatic prepolymer" produced in the first reaction step, is reacted in at least one esterification and/or ester-exchange reaction and the resulting water or methanol is extracted, (ii) at least one aromatic dicarboxylic acid (or an acid anhydride thereof) including dimethyl terephthalate and terephthalic acid; and (iv) at least one aliphatic (or alicyclic) glycol selected from at least one of 1,4-butanediol and ethylene glycol, are added and reacted at a temperature from 180°C to 220°C where the aromatic dicarboxylic acid will react with the aliphatic glycol.

In the third reaction step, at a temperature of from 150°C to 180°C at which the aromatic dicarboxylic acid will not react with the aliphatic glycol, (iii) one or more aliphatic or alicyclic dicarboxylic acids (or anhydrides) including succinic acid, is added, and at least one esterification and/or ester-exchange reaction is performed. After the resulting water or methanol has been extracted, polymer resin is obtained. If the reaction temperature is lower than 150°C, the water or methanol is not extracted. If the reaction temperature is higher than 180°C, the aromatic dicarboxylic acid will react with the aliphatic glycol, so the biodegradability of the product decreases. By controlling the reaction temperature to the range from 150°C to 180°C, the aromatic dicarboxylic acid cannot take part in the reaction.

For 1.0 mole of total dicarboxylic acid or anhydride thereof (sum of (ii) and (iii)) which are added in the second and third reaction steps, the mole ratio of (iv) aliphatic (or alicyclic) glycol is in the range of from 1.15 mole to 2.0 mole, and preferably in the range of from 1.3 mole to 1.4 mole. And for 1.0 mole of total dicarboxylic acid or anhydride thereof which is added in the second and third reaction steps, the mole ratio between aromatic component to aliphatic component is in the range of from 0.3:0.7 to 0.65:0.35. If the mole ratio is less than 0.3:0.7, the copolyester resin has low melting point and poor processability. If the mole ratio is higher than 0.65:0.35, the rate of biodegradability of the product decreases as a result of the aromatic component.

Finally, in the fourth reaction step, by polycondensing the polymeric resin obtained in the third reaction step, at a temperature from 220°C to 260°C and a pressure of 0.005~10Torr, a copolyester resin with number-average molecular weight of from 30,000 to 90,000, weight-average molecular weight of from 100,000 to 600,000, melting point of from 70°C to 150°C, and melt index of from 0.1 to 50 g/lOmin. (190°, 2,160g) is obtained.

At the start of and/or at the end of the esterification or ester-exchange reaction in the first, second and third reaction steps, and at the start of polycondensation reaction in the fourth reaction step, a single catalyst or a mixture of catalysts can be added, wherein the amount of the catalyst(s) is preferably in the range of from 0.02wt% to 2.0wt% of total reactants. If the amount of catalyst employed is less than 0.02wt%, it is very slow or even impossible to extract the theoretical amount of water, methanol or glycol. If the amount of the catalyst employed is more than 2.0wt%, the color of the product is poor even though the theoretical amount of water, methanol or glycol can easily be extracted. The catalysts may be selected from one or more compounds of Ti, Ge, Zn, Fe, Mn, Co, and Zr, preferably, an organometallic compound consisting of titanate, antimonate or tin oxide, more preferably, selected from one or more of tetrabutyl titanate, calcium acetate, antimony trioxide, dibutyltin oxide, zinc acetate, antimony acetate, antimony glycolate and tetrapropyl titanate.

Additionally, at the start of and/or the end of the esterification or ester-exchange reaction in the first, second and third reaction step, and at the start of and/or the end of the polycondensation reaction in the fourth reaction step, a stabilizer can be added wherein the amount of the stabilizer employed preferably ranges from 0.02wt% to 2.0wt%. If the amount of the stabilizer used is less than 0.02wt%, the effect of the stabilizer is not sufficient and the color of the product may be yellow or brown. If the amount of the stabilizer exceeds 2.0wt%, the time required for the reaction is extended and the product may not have sufficiently-high molecular weight. The preferred amount of the stabilizer is about 0.22wt%, and the stabilizer used may be at least one or more of phosphatic stabilizer consisting of trimethyl phosphate, phosphoric acid and triphenyl phosphate.

The copolyester resin according to the present invention has good physical properties and biodegradability, so the limitations on use of conventional aliphatic polyesters because of their poor tensile and tear strength do not apply. The conventional aliphatic polyesters biodegrade completely in the environment, but they have poor physical properties and inferior processability and so are not suitable for packaging film, rubbish bags and agricultural films. But the copolyester resin of the present invention can be used in such applications.

A further understanding of the invention can be obtained with reference to certain specific examples which are provided hereinafter for the purpose of illustration only and which are not intended to be limiting.

## EXAMPLES

In the following examples, the tensile strength, and elongation at break of the films were measured by ASTM D882 after the copolyester was press-formed to about 150μm in thickness; the melt index (MI) was measured by ASTM D1238, where the temperature was 190□and the load was 2,160g. The melting point was measured by using differential scanning calorimetry (DSC) with the scan rate of 10°C/minute. Molecular weights are measured by gel permeation chromatography (GPC) and are based on polystyrene equivalent molecular weights.

The biodegradation test was done with the 35> thickness blown film, and the sample was cut to dimensions of 20cm by 20cm. To prevent the loss of the film sample, the sample was put between one pair of sieve (No. 18 mesh whose opening is lmm), and buried to 10cm depth in soil. And the sample was checked every one month, and the weight loss due to biodegradation was measured. The test was done at the R&D Center of Ire Chemical Ltd. (5-29, Bangye-Ri, Munmak-Up, Wonju-Si, Kangwon-Do, Korea). The biodegradation test was performed during the summer season, from June to August, and 3 film samples were prepared, and the weight loss data averaged.

### EXAMPLE 1

First, after purging a 500ml reactor with nitrogen, 23.6g of succinic acid, 27g of 1,4-butanediol, and 0.1g of tetrabutyl titanate acting as a catalyst are added to a reactor, and the mixture is esterification reacted until the approximate theoretical amount of water is produced at the temperature of 205°C. After water is extracted, 34.4g of "aliphatic prepolymers", wherein the number average molecular weight of "aliphatic prepolymers" is approximately 600, is obtained.

And then, 77.7g of dimethyl terephthalate, 135.2g of 1,4-butanediol, 0.2g of tetrabutyl titanate acting as a catalyst are added thereto, and the mixture is ester-exchange reacted until the approximate theoretical amount of methanol is produced at the temperature of 205°C. After the methanol is extracted, 35.4g of succinic acid and 43.8g of adipic acid are added thereto, and the mixture is esterification reacted until the approximate theoretical amount of water is produced at the temperature of 180°C.

And then, 0.1g of antimony trioxide, 0.3g of dibutyltin oxide, 0.07g of tetrabutyl titanate acting as catalysts, and 0.1g of trimethyl phosphate acting as a stabilizer are added thereto.

Finally, the temperature is elevated to 245°C and polycondensation (or condensation-polymerization) is allowed to proceed for 180 minutes under 0.3 Torr vacuum condition.

The product has a melt index of 6 g/lOmin. (190°C, 2,160g), a number average molecular weight of 48,000, a weight average molecular weight of 310,000 and a melting point of 80°C.

The weight loss on biodegradation was 21wt% after 1 month, 53wt% after 2 months and 91wt% after 3 months.

EXAMPLE 2

First, after purging a 500ml reactor with nitrogen, 2.95g of succinic acid, 3.65g of adipic acid, 6.3g of 1,4-butanediol, and 0.1g of tetrabutyl titanate acting as a catalyst are added to a reactor, and the mixture is esterification reacted until the approximate theoretical amount of water is produced at the temperature of 205°C. After water is extracted, 9.3g of "aliphatic prepolymers", wherein the number average molecular weight of "aliphatic prepolymers" is approximately 1,500, is obtained.

And then, 78.8g of dimethyl terephthalate, 126g of 1,4-butanediol, 6.2g of ethylene glycol, and 0.2g of tetrabutyl titanate acting as a catalyst are added thereto, and the mixture is ester-exchange reacted until the approximate theoretical amount of methanol is produced at the temperature of 205°C. After the methanol is extracted, 70.8g of succinic acid is added thereto, and the mixture is esterification reacted until the approximate theoretical amount of water is produced at the temperature of 180°C.

And then, 0.1g of antimony trioxide, 0.3g of dibutyltin oxide, 0.07g of tetrabutyl titanate acting as catalysts, and 0.1g of trimethyl phosphate acting as a stabilizer are added thereto.

Finally, the temperature is elevated to 245°C and polycondensation (or condensation-polymerization) is allowed to proceed for 220 minutes under 0.3 Torr vacuum condition.

The product has a melt index of 7 g/lOmin. (190°C, 2,160g), a number average molecular weight of 47,000, a weight average molecular weight of 230,000 and a melting point of 90°C.

The weight loss on biodegradation was 15wt% after 1 month, 32wt% after 2 months and 68wt% after 3 months.

EXAMPLE 3

First, after purging a 500ml reactor with nitrogen, 2.95g of succinic acid, 2.48g of ethylene glycol, and 0.1g of tetrabutyl titanate acting as a catalyst are added to a reactor, and the mixture is esterification reacted until the approximate theoretical amount of water is produced at the temperature of 205°C. After water is extracted, 3.6g of "aliphatic prepolymers", wherein the number average molecular weight of "aliphatic prepolymers" is approximately 400, is obtained.

And then, 108.4g of dimethyl terephthalate, 135.2g of 1,4-butanediol, and 0.2g of tetrabutyl titanate acting as a catalyst are added thereto, and the mixture is ester-exchange reacted until the approximate theoretical amount of methanol is produced at the temperature of 205°C. After the methanol is extracted, 53.1g of succinic acid is added thereto, and the mixture is esterification reacted until the approximate theoretical amount of water is produced at the temperature of 180°C.

And then, 0.1g of antimony trioxide, 0.3g of dibutyltin oxide, 0.07g of tetrabutyl titanate acting as catalysts, and 0.1g of trimethyl phosphate acting as a stabilizer are added thereto.

Finally, the temperature is elevated to 245°C and polycondensation (or condensation-polymerization) is allowed to proceed for 200 minutes under 0.3 Torr vacuum condition.

The product has a melt index of 8 g/lOmin. (190°C, 2,160g), a number average molecular weight of 41,000, a weight average molecular weight of 170,000 and a melting point of 128°C.

The weight loss on biodegradation was 6wt% after 1 month, 18wt% after 2 months and 37wt% after 3 months.

EXAMPLE 4

First, after purging a 500ml reactor with nitrogen, 5.9g of succinic acid, 6.3g of 1,4-butanediol, and 0.1g of tetrabutyl titanate acting as a catalyst are added to a reactor, and the mixture is esterification reacted until the approximate theoretical amount of water is produced at the temperature of 205°C. After water is extracted, 8.6g of "aliphatic prepolymers", wherein the number average molecular weight of "aliphatic prepolymers" is approximately 3,000, is obtained.

And then, 76.1g of terephthalic acid, 135.2g of 1,4-butanediol, and 0.2g of tetrabutyl titanate acting as a catalyst are added thereto and the mixture is esterification reacted until the approximate theoretical amount of water is produced at the temperature of 205°C. After the water is extracted, 29.5g of succinic acid and 43.8g of adipic acid are added thereto and the mixture is esterification reacted until the approximate theoretical amount of water is produced at the temperature of 180°C.

And then, 0.1g of antimony trioxide, 0.3g of dibutyltin oxide, 0.07g of tetrabutyl titanate acting as catalysts

and 0.1g of trimethyl phosphate acting as a stabilizer are added thereto.

Finally, the temperature is elevated to 245°C and polycondensation (or condensation-polymerization) is allowed to proceed for 180 minutes under 0.3 Torr vacuum condition.

The product has a melt index of 2 g/lOmin. (190°C, 2,160g), a number average molecular weight of 61,000, a weight average molecular weight of 290,000 and a melting point of 117°C.

The weight loss on biodegradation was 9wt% after 1 month, 28wt% after 2 months and 56wt% after 3 months.

EXAMPLE 5

First, after purging a 500ml reactor with nitrogen, 3.65g of adipic acid, 4.05g of 1,4-butanediol, and 0.1g of tetrabutyl titanate acting as a catalyst are added to a reactor, and the mixture is esterification reacted until the approximate theoretical amount of water is produced at the temperature of 205°C. After water is extracted, 5g of "aliphatic prepolymers", the number average molecular weight of "aliphatic prepolymers" is approximately 10,000, is obtained.

And then, 66.8g of terephthalic acid, 135.2g of 1,4-butanediol, and 0.2g of tetrabutyl titanate acting as a catalyst are added thereto and the mixture is esterification reacted until the approximate theoretical amount of water is produced at the temperature of 205°C. After the water is extracted, 87.6g of adipic acid is added thereto, and the mixture is esterification reacted until the approximate theoretical amount of water is produced at the temperature of 180°C.

And then, 0.1g of antimony trioxide, 0.3g of dibutyltin oxide, 0.07g of tetrabutyl titanate acting as catalysts and 0.1g of trimethyl phosphate acting as a stabilizer are added thereto.

Finally, the temperature is elevated to 245°C and polycondensation (or condensation-polymerization) is allowed to proceed for 200 minutes under 0.3 Torr vacuum condition.

The product has a melt index of 11 g/lOmin. (190°C, 2,160g), a number average molecular weight of 38,000, a weight average molecular weight of 174,000 and a melting point of 89°C.

The weight loss on biodegradation was 10wt% after 1 month, 37wt% after 2 months and 71wt% after 3 months.

COMPARATIVE EXAMPLE 1

After purging a 500ml reactor with nitrogen, 66.8g of terephthalic acid, 135.2g of 1,4-butanediol, 70.8g of succinic acid, and 0.07g of tetrabutyl titanate acting as a catalyst are added to a reactor. And the temperature is elevated under an atmosphere of nitrogen, esterification is allowed for 2 hours at the temperature of 200°C, and after nitrogen is stopped, esterification is continually allowed for 0.5 hours under 20 to 2 mmHg pressure.

And then, under an atmosphere of nitrogen, 0.07g of tetrabutyl titanate, 0.45g of dibutyltin oxide acting as catalysts, and 0.2g of trimethyl phosphate acting as a stabilizer are added thereto. Then, the de-glycol reaction is allowed for 200 minutes under 0.4 Torr pressure at the temperature of 250°C.

The product has a number average molecular weight of 18,000, a weight average molecular weight of 52,000 and a melting point of 92°C.

The weight loss on biodegradation was 2.5wt% after 1 month, 9wt% after 2 months and 21wt% after 3 months.

COMPARATIVE EXAMPLE 2

After purging a 500ml reactor with nitrogen, 83.5g of terephthalic acid, 135.2g of 1,4-butanediol, 59g of succinic acid, and 0.07g of tetrabutyl titanate acting as a catalyst are added to a reactor. And the temperature is elevated under an atmosphere of nitrogen, esterification is allowed for 2 hours at the temperature of 200°C, and after nitrogen is stopped, esterification is continually allowed for 0.5 hours under 20 to 2 mmHg pressure.

And then, under an atmosphere of nitrogen, 0.07g of tetrabutyl titanate, 0.45g of dibutyltin oxide acting as catalysts, and 0.2g of trimethyl phosphate acting as a stabilizer are added thereto. Then, the de-glycol reaction is allowed for 200 minutes under 0.4 Torr pressure at the temperature of 250°C.

The product has a number average molecular weight of 22,000, a weight average molecular weight of 61,000 and a melting point of 121 °C.

The weight loss on biodegradation was lwt% after 1 month, 5wt% after 2 months and 7wt% after 3 months.

COMPARATIVE EXAMPLE 3

After purging a 500ml reactor with nitrogen, 66.8g of terephthalic acid, 135.2g of 1,4-butanediol, 29.5g of succinic acid, 36.5g of adipic acid, and 0.07g of tetrabutyl titanate acting as a catalyst are added to a reactor. And the temperature is elevated under an atmosphere of nitrogen, esterification is allowed for 2 hours at the temperature of 200°C, and after nitrogen is stopped, esterification is continually allowed for 0.5 hours under 20 to 2 mmHg pressure.

And then, under an atmosphere of nitrogen, 0.07g of tetrabutyl titanate, 0.45g of dibutyltin oxide acting as catalysts, and 0.2g of trimethyl phosphate acting as a stabilizer are added thereto. Then, the de-glycol reaction is allowed for 200 minutes under 0.4 Torr pressure at the temperature of 250°C.

The product has a number average molecular weight of 15,000, and a weight average molecular weight of 43,000 and a melting point of 90°C.

The weight loss on biodegradation was 3wt% after 1 month, 11wt% after 2 months and 24wt% after 3 months.

The properties of the copolyester resin of the present invention according to the examples 1 to 5 and the conventional copolyester resin according to the comparative examples 1 to 3 are provided in Table 1. As shown in table 1, the copolyester resin of the present invention is high molecular weighted polymer both in number average and in weight average, and has good physical properties and biodegradation, so it can be used in many practical uses including packaging film, rubbish bags and agricultural film.

[Table 1]

| | | EXAMPLE | | | | | COMPARATIVE EXAMPLE | | |
|---|---|---|---|---|---|---|---|---|---|
| | | 1 | 2 | 3 | 4 | 5 | 1 | 2 | 3 |
| Succinic acid | | 35.4 | 70.8 | 53.1 | 29.5 | | 70.8 | 59.0 | 29.5 |
| Adipic acid | | 43.8 | | | 43.8 | 87.6 | | | 36.5 |
| Ethylene glycol | | | 6.2 | | | | | | |
| 1,4-butanediol | | 135.2 | 126.0 | 135.2 | 135.2 | 135.2 | 135.2 | 135.2 | 135.2 |
| Terephthalic acid | | | | | 76.1 | 66.8 | 66.8 | 83.5 | 66.8 |
| Dimethyl terephthalate | | 77.7 | 78.8 | 108.4 | | | | | |
| "aliphatic prepolymers" having Mn of 300 to 30,000 | | 34.4 | 9.3 | 3.6 | 8.6 | 5.0 | | | |
| Number average Molecular weight | | 48,000 | 47,000 | 41,000 | 61,000 | 38,000 | 18,000 | 22,000 | 15,000 |
| Weight average Molecular weight | | 310,000 | 230,000 | 170,000 | 290,000 | 174,000 | 52,000 | 61,000 | 43,000 |
| Tensile strength (kg/cm$^2$) | | 400 | 380 | 370 | 450 | 320 | 150 | 200 | 140 |
| Elongation (%) | | 700 | 700 | 700 | 700 | 700 | 400 | 600 | 200 |
| MI(g/10min) | | 6 | 7 | 8 | 2 | 11 | NA | 70 | NA |
| Melting point (°C) | | 80 | 90 | 128 | 117 | 89 | 92 | 121 | 90 |
| Weight loss on Biodegradation (%) | after 1 month | 21 | 15 | 6 | 9 | 10 | 2.5 | 1 | 3 |
| | after 2 month | 53 | 32 | 18 | 28 | 37 | 9 | 5 | 11 |
| | after 3 month | 91 | 68 | 37 | 56 | 71 | 21 | 7 | 24 |

**Claims**

**1.** A copolyester resin composition having a number-average molecular weight from 30,000 to 90,000, comprising (i) 0.1 to 30% by weight of an aliphatic prepolymer represented by the following chemical formula 1:

$$HO\text{-}[OC\text{-}(CH_2)_a\text{-}COO\text{-}(CH_2)_b\text{-}O]_n\text{-}H \tag{1}$$

wherein a is 2 to 10, b is 2 to 10 and n is an integer such that the number-average molecular weight of the aliphatic prepolymer is 300 to 30,000 ; (ii) one or more aromatic dicarboxylic acids or anhydrides thereof; (iii) one or more aliphatic or alicyclic dicarboxylic acids or anhydrides thereof; and (iv) one or more aliphatic or alicyclic glycols.

2. The copolyester resin composition according to claim 1, having a weight-average molecular weight from 100,000 to 600,000, determined by GPC; melting point from 70°C to 150°C, determined by DSC; and melt index from 0.1 to 50 g/lOmin. (190°C, 2,160g) determined by ASTM D1238.

3. The copolyester resin composition according to claim 1, wherein said aliphatic prepolymer having a number-average molecular weight of from 300 to 30,000 is prepared by at least one condensation esterification and/or an ester-exchange reaction between

  (a) one or more aliphatic or alicyclic dicarboxylic acids or anhydrides; and

  (b) one or more aliphatic or alicyclic glycols.

4. The copolyester resin composition according to claim 3, wherein the mole ratio of the dicarboxylic acid or anhydride thereof to the glycol is from 1:1.1 to 1:2.

5. The copolyester resin composition according to claim 1, wherein the mole ratio of the total dicarboxylic acid to the aliphatic or alicyclic glycol is from 1:1.1 to 1:2.

6. The copolyester resin composition according to claim 1, wherein said aromatic dicarboxylic acid or anhydride is selected from dimethyl terephthalate, terephthalic acid, phthalic acid, phthalic anhydride, isophthalic acid, 4-methylphthalic acid, 4-methylphthalic anhydride and dimethyl phthalate and mixtures thereof.

7. The copolyester resin composition according to claim 1, wherein said aliphatic dicarboxylic acid or anhydride thereof is selected from succinic acid, glutaric acid, adipic acid, pimelic acid, suberic acid, azelaic acid, sebacic acid, 1,9-nonanedicarboxylic acid, 1,10-decanedicarboxylic acid and/or an acid anhydride thereof and mixtures thereof.

8. The copolyester resin composition according to claim 1, wherein said aliphatic or alicyclic glycol is selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol and mixtures thereof.

9. The copolyester resin composition according to claim 3, wherein said aliphatic or alicyclic dicarboxylic acid or anhydride thereof is selected from succinic acid, glutaric acid, adipic acid, pimelic acid, suberic acid, azelaic acid, sebacic acid, 1,9-nonanedicarboxylic acid, 1,10-decanedicarboxylic acid and/or an acid anhydride thereof and mixtures thereof.

10. The copolyester resin composition according to the claim 3, wherein said aliphatic or alicyclic glycol is selected from ethylene glycol, diethylene glycol, triethylene glycol, tetraethylene glycol, propylene glycol, 1,3-propanediol, 1,3-butanediol, 1,4-butanediol, neopentyl glycol, 1,5-pentanediol, 1,6-hexanediol, 1,7-heptanediol, 1,2-octanediol, 1,8-octanediol, 1,9-nonanediol, 1,2-decanediol, 1,10-decanediol, decamethylene glycol and mixtures thereof.

11. A method for preparing a high molecular weight copolyester resin comprising;

  a first step of preparing an aliphatic prepolymer having a number average molecular weight of from 300 to 30,000 comprising conducting a condensation, esterification, and/or ester-exchange reaction with one or more aliphatic or alicyclic dicarboxylic acids or anhydrides and one or more aliphatic or alicyclic glycols;

  a second step of performing at least one esterification and/or ester-exchange reaction with the aliphatic prepolymer of the first step at least one aromatic dicarboxylic acid or anhydride thereof and at least one of aliphatic or alicyclic glycol at a temperature from 180°C to 220°C;

  a third step of preparing a polymeric resin by performing at least one of esterification and/or ester-exchange reaction by adding one or more aliphatic or alicyclic dicarboxylic acids or anhydrides thereof to the product of the second step at a temperature of from 150°C to 180°C; and

  a fourth step of performing a polycondensation reaction of the product of the third step at a temperature from 220°C to 260°C under a pressure of 0.005~10Torr.

12. The method for preparing aliphatic prepolymers according to claim 11, wherein the mole ratio of the aliphatic dicarboxylic acid to the aliphatic glycol is from 1:1.1 to 1:2.

13. The method for preparing copolyester resin according to claim 11, wherein the mole ratio of the dicarboxylic acid to the aliphatic glycol is from 1:1.1 to 1:2.

14. The method for preparing copolyester resin according to the claim 11, wherein from 0.02wt% to 2wt% of catalyst is present at the start or at the end of the esterification or ester-exchange reaction in the first, second and third reaction step.

15. The method for preparing copolyester resin according to the claim 14, wherein said catalyst is selected from tetrabutyl titanate, calcium acetate, antimony trioxide, dibutyltin oxide, zinc acetate, antimony acetate, antimony glycolate, tetrapropyl titanate and mixtures thereof.

16. The method for preparing copolyester resin according to claim 11, wherein from 0.02wt% to 2wt% of stabilizer is present at the start or at the end of the esterification or ester-exchange reaction in the first, second and third reaction step.

17. The method for preparing copolyester resin according to claim 16, wherein the stabilizer is selected from trimethyl phosphate, phosphoric acid, triphenyl phosphate and mixtures thereof.